(19) Europäisches Patentamt
European Patent Office
Office européen des brevets

(11) **EP 4 296 902 A1**

(12) **EUROPEAN PATENT APPLICATION**

(43) Date of publication:
**27.12.2023 Bulletin 2023/52**

(21) Application number: **22290041.7**

(22) Date of filing: **23.06.2022**

(51) International Patent Classification (IPC):
**G06N 3/063** (2023.01)      **G06N 3/04** (2023.01)

(52) Cooperative Patent Classification (CPC):
**G06N 3/063; G06N 3/0464;** G06N 3/0495

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GrAI Matter Labs S.A.S.**
**75012 Paris (FR)**

(72) Inventors:
• **Pires Dos Reis Moreira, Orlando Miguel**
**5656 AG Eindhoven (NL)**
• **Bamberg, Lennart**
**5656 AG Eindhoven (NL)**
• **Waeijen, Luc Johannes Wihelmus**
**5656 AG Eindhoven (NL)**

(74) Representative: **V.O.**
**P.O. Box 87930**
**2508 DH Den Haag (NL)**

(54) **PROCESSOR SYSTEM AND METHOD FOR OPERATING THE SAME**

(57)    A processor system (1) is disclosed herein that comprises a plurality of processor cores and a message exchange network, that is configured to execute a neural network having at least a first and a second neural network layer. A first of the processor cores is configured to transmit a plurality of activation event data in a packed message, which packed message comprises a common indication for a source of the plurality of activation event data in the first neural network layer. Therewith a load of the message exchange network can be significantly reduced. Also a number of memory accesses can be reduced.

FIG. 1

## Description

BACKGROUND

The present disclosure pertains to a processor system comprising a plurality of processor cores and a message exchange network, which processor system is configured to execute a neural network.

The present disclosure further pertains to a method of operating such a processor system.

In a processor system as disclosed herein, the respective processor cores are allocated to respective neural network layers or portions thereof. I.e. during execution a processor core allocated to a neural network layer or portion thereof performs the computations and operations defined by the neural network elements (further denoted as neurons) therein. The wording "allocated processor core" of a neuron will be used herein to denote a processor core that is allocated to a neural network layer or portion thereof that comprises that neuron.

In a processor system that executes a neural network, computation in a processor core is triggered by the arrival of an event containing the output value as a result of activation of a neuron of the neural network executed by the processor core. Typically, an event is sent from the processor core where the activation is computed to all the processor cores where the successors of the activated neuron are to be processed. In each of those processor cores, the event is typically received in an event queue and then processed by accessing and updating the neuron state of all the successors of the activated neuron. In literature in this technical field, the neuron state is also referred to as neuron or membrane potential. This known procedure has the following inefficiencies:

For every activation event, the coordinate values of the event must be sent as well as an identifier for the target neural network layer or portion thereof.

For every activation event received by the receiving processor core, that receiving processor core has to read the neuron state from memory, re-compute the neuron state and write back the recomputed neuron state to memory for each neuron to be updated. Neuron state reads and writes are responsible for a large percentage of energy consumption in updating neuron states and spend a large percentage of the available memory bandwidth.

SUMMARY

It is an object to mitigate at least some of these inefficiencies.

In accordance therewith an improved processor system is presented as defined in claim 1.

Further an improved method of operating a processor system is presented as defined in claim 10.

The improved processor system as defined in claim 1 comprises a plurality of processor cores and a message exchange network, wherein the processor cores are configured to exchange messages between each other using the message exchange network. In an example the plurality of processor cores are provided on a single integrated circuit and the message exchange network is provided as a network on chip (NoC). It is further conceivable that the improved processor system comprises a plurality of such integrated circuits which are mutually coupled by a further message exchange network. The processor cores are provided as dedicated hardware that is configured to perform neural network operations such as neuron state evaluation or as programmable processor units having an instruction set comprising dedicated instructions for such operations.

The claimed processor system is configured to execute a neural network having at least a first and a second neural network layer. In practice a neural network may have tens or hundreds of layers, but for the subsequent description it presumed that at least two neural network layers are present.

The first neural network layer has a corresponding first feature map and the second neural network layer has a corresponding second feature map. A feature map corresponding to a neural network layer comprises a plurality of feature map data elements that are each indicative for a neural state of a respective neuron of the neural network layer. The feature map data is addressable by a set of two or more coordinates, comprising at least a position coordinate that indicates a position in the feature map and a channel coordinate that indicates an element of a feature channel at the indicated position. A simple example of a feature map is an image having a matrix of image values. Pixels in the image have planar coordinates x,y and may have pixel values for each of three color channels. The color channels can be considered as feature channels. Accordingly, in this example, the feature map data can be represented by the values of each of the color channels at each position in the feature map. In another example the feature map is two-dimensional having one dimension t indicating the time and another dimension specifying sound channels. Likewise in a convolutional neural network a neural network layer produces a feature map that is defined by the values for each of the feature channels at each position in the feature map. In this connection it is presumed that the feature map is defined by a pair of two spatial coordinates (position coordinates) and a channel coordinate that specifies the channel. However, other embodiments may be contemplated wherein the feature map has more than two spatial coordinates, for example as in a three-dimensional image.

The processor system is configured to execute the neural network in that in operation it performs all operations that are involved in the execution of the neural network. Herein a first of the processor cores executes at least a portion of the first neural network layer. This includes the option that the first of the processor cores executes the complete first neural network layer. In operation it evaluates the neuron states in the first feature map or the corresponding portion thereof. The processor core evaluates the neuron state, for example by computation of an autonomous state change, e.g. by computation of a state change based on a leakage model or by performing an integration process. Also the processor core can change a neuron state during evaluation in response to an event message. Subject to the evaluation, the processor core generates activation event data to be transmitted to a second of the processor cores which executes at least a portion of the second neural network layer. Typically the neuron state is considered as a membrane potential. If the processor core as a result of the evaluation has determined that the membrane potential of the neuron exceeds a threshold value then activation event data is transmitted. In an embodiment the processor core is configured to perform these two operations in mutually different operational stages. In a first stage the processor core performs the state evaluation of all neurons of the neural network layer or portion thereof and in a subsequent stage the processor core performs the operations necessary for generating the activation event data. In an alternative embodiment the processor core is configured to perform the operations for generating the activation event data for a neuron immediately when it determines that activation condition (e.g. the exceeding of a threshold level) is complied with.

It is presumed that the processor core that receives an activation event message stores the neural states of the neurons executed therewith in a dedicated state memory. The neural network executed by the processor system may additionally comprise stateless neurons. A processor core executing a neural network layer with stateless neurons computes the state data each time from scratch. This may be different from layer to layer. I.e. some neural network layers may have a reserved storage space accessible to the executing processor core for storing their feature map and other neural network layers may have volatile neural state data.

If a processor core allocated to the first neural network layer generates activation event data, this is addressed to specific neurons of the second neural network layer. The second processor core which executes the second neural network layer or the portion thereof comprising the specific neurons then updates the neural state of the specific neurons upon receipt of the activation event data.

The improved processor system is characterized in that the first of the processor cores is configured to transmit a plurality of activation event data issued from a plurality of neurons in the first neural network layer having a common value for at least one of their coordinates in a packed message, wherein the packed message includes that at least one common coordinate value. In this way a reduced load of the message exchange network is achieved in that the total amount of source coordinate data to be transmitted is less than in the case that respective source coordinate date is transmitted for each activation event. In addition, less buffer space needs to be reserved by the receiving processor core to store the packed message than would be the case in the absence of the claimed measures.

In some embodiments the common value for at least one of the coordinates comprises a respective common value for each of the position coordinates of the neurons in the first neural network layer for which the events bundled in the packed message are generated, and the packed message comprises for each of the plurality of activation event data a respective indication of the channel coordinate of said neurons as well as a respective activation event value. Hence, the message is packed such that all activation events originate from neurons of the first neural network layer having the same feature map position coordinate values. Therewith the values of the feature map position coordinates need to be transmitted only once.

In an example of this embodiment the **indication of the channel coordinate** (Z) for each of the plurality of activation event data comprises an absolute value of the channel coordinate of a first one of the neurons for which activation event data is transmitted and one or more relative values, each indicating a difference between the absolute value of the channel coordinate of a neuron for which activation event data is transmitted and the absolute value of the channel coordinate of a preceding neuron for which activation event data is transmitted.

The inventors recognized that in practice, a difference in channel coordinate values of neurons having a common position in the first neural network layer that generate an event is relatively small as compared to the available channel coordinate address range. Therewith the relative values can be encoded with a substantially lesser number of bits than that required for encoding an absolute channel coordinate value. Therewith the event messages can be even more compactly encoded in the packed message. For example only each one of four channel coordinate values is provided as an absolute address. The remaining three channel coordinate values are provided as a relative address (i.e. relative to the preceding one) with a lesser number of bits. For example the relative channel coordinate values are encoded with at most half the number of bits with which the absolute channel coordinate value is encoded.

In this connection it is observed that instead of packing activation event data having a common position coordinate value or a common set of position coordinate values in the first neural network layer, it may alternatively be contemplated to pack activation event data with a common channel coordinate value instead. In case that event data with a common channel coordinate value is packed, the packed message comprises a respective indication of each position of the neurons for which the event data was issued. Also in that case a further compactification is possible by encoding the absolute coordinate values of only one of those neurons and by encoding the relative coordinate values for the other event data in a manner analogous as specified for encoding the relative channel coordinate values.

Packing activation event data with common source feature map position coordinate values is considered however more efficient.

In some embodiments the second processor core performs all neuron state updates of neuron in the second neural network layer or portion thereof comprising that neuron before it continues to perform neuron state updates of a subsequent neuron in the second neural network layer or portion thereof. Hence, the processor core that executes (the portion of) the second neural network layer comprising the neuron only needs to access the storage space for the neural state data once to obtain the current state and once to write back the new state after it has performed the updates on the basis of the plurality of event data in the packed message.

In some embodiments of the processor system the first of the processor cores is configured to temporarily buffer activation event data which are generated while evaluating neuron states of the first feature map. This renders it possible to more efficiently bundle activation event data in a packed message. For example, in case of a sparse activation, activation event data for a position with particular position coordinate values can be collected in the buffer until a sufficient number of activation events with relatively small channel coordinate value differences can be packed, so that a small number of bit values suffices to indicate the differences. In an example thereof, the first of the processor cores is configured to transmit the packed message for a predetermined number of buffered activation event data. In this way the message exchange network load can be controlled.

BRIEF DESCRIPTION OF THE DRAWINGS

These and other aspects are described in more detail with reference to the drawings. Therein:

FIG. 1 schematically shows an embodiment of an improved processor system that comprises a plurality of processor cores and a message exchange network;

FIG. 2 illustrates an example of an allocation of processor cores to two neural network layers of a neural network;

FIG. 3 schematically shows the feature maps of the two neural network layers;

FIG. 4 shows components of an exemplary processor core;

FIG. 5 schematically shows aspects of an improved method to operate the improved processor system;

FIG. 6A, 6B show a header phit and the body phit emitted in a first operational mode;

FIG. 7A, 7B show a header phit and a body phit emitted in a second operational mode in a first case;

FIG. 8A shows a header phit emitted in the second operational mode in a second case;

FIG. 8B shows a body phit emitted for every four events in the second operational mode in the second case;

FIG. 8C shows a further body phit emitted for every two events in the second operational mode in the second case;

FIG. 9 shows operational steps performed by a receiving processor core;

FIG. 10 shows an exemplary process of updating a single destination neuron on the basis of a plurality of events in a package.

DETAILED DESCRIPTION OF EMBODIMENTS

In this application like reference symbols in the various drawings indicate like elements unless otherwise indicated.

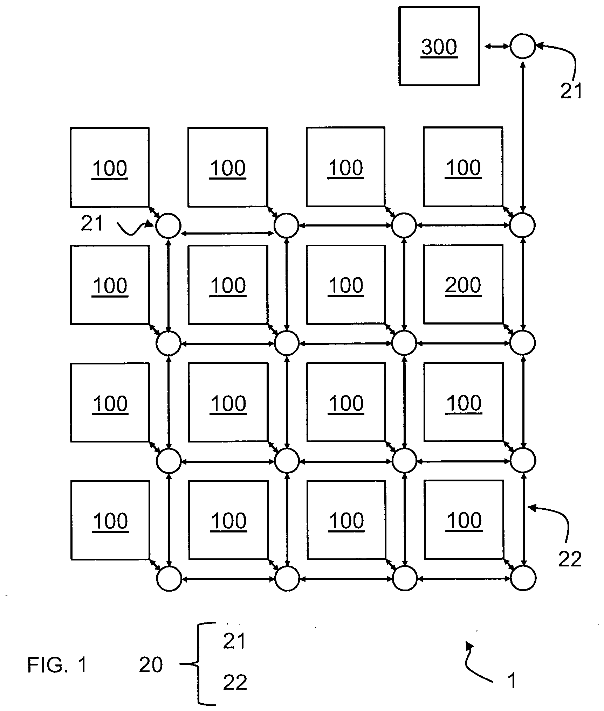

FIG. 1 schematically shows a processor system 1 that comprises a plurality of processor cores 100 and a message exchange network 20. In the embodiment shown, the message exchange network 20 comprises a network node 21 for each processor core 100 and mutually neighboring network nodes 21 are coupled by network links 22. The processor cores 100 are configured to exchange messages between each other using the message exchange network 20. In the example shown the multiprocessor system comprises additional components, such as an arithmetical processor core 200 specifically suitable for arithmetic computations. The processor system 1 is further coupled to a host processor 300.

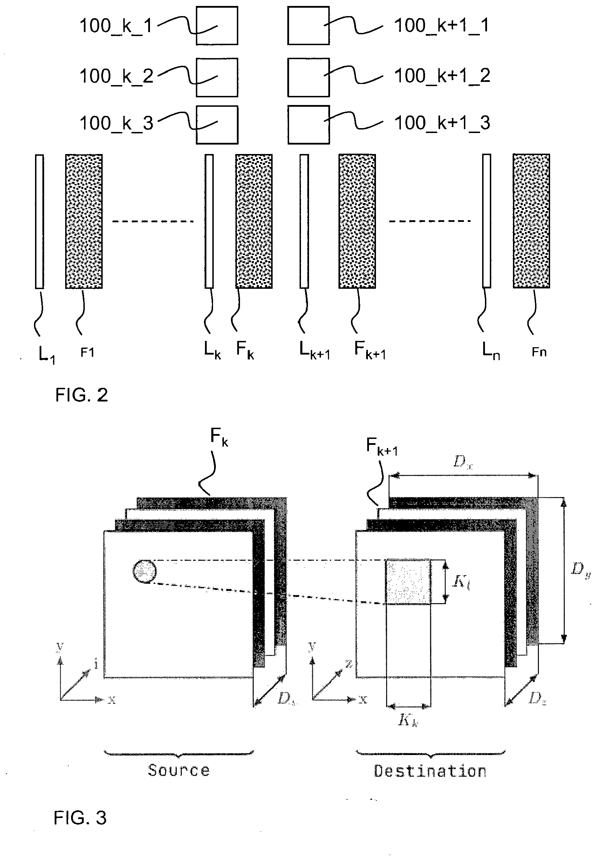

The processor system is configured to execute a neural network having at least a first and a second neural network layer. In the example shown in FIG. 2, the network has n layers. By way of example specific reference is made to the subsequent layers $L_k$, $L_{k+1}$, herein defined as the at least a first and a second neural network layer.

As schematically shown in FIG. 2, the first neural network layer $L_k$ has a first feature map $F_k$ and the second neural network layer $L_{k+1}$ has a corresponding second feature map $F_{k+1}$. A feature map of a neural network layer comprises a plurality of feature map data elements that each are indicative for a neural state of a respective neuron of the neural network layer, and the feature map data is addressable by a set of at least two coordinates, including at least a position coordinate, here a pair of position coordinates $(x,y)$, to indicate a position in the feature map and a channel coordinate $(i,z)$ to indicate an element of a feature channel at the indicated position. For example, as shown in FIG. 3, the feature maps $F_k$, $F_{k+1}$ of the neural network layers $L_k$, $Lk+i$ have a width $D_x$ in the x-coordinate direction and a height of $D_y$ in the y-coordinate direction. In the example shown, the first feature map $F_k$ has $D_i$ channels and the second feature map $Fk+i$ has $D_z$ channels. Therewith feature map data elements of the first feature map $F_k$ are uniquely addressable with a first coordinate triple and feature map data elements of the second feature map $F_{k+1}$ are unique-

ly addressable with a second coordinate triple.

As schematically shown in FIG. 2, a first of the processor cores 100, specifically denoted as 100_k_1 executes at least a portion of the first neural network layer $L_k$. This means that the processor core 100_k_1 is configured to evaluate the neuron states in the at least a portion of the first feature map $F_k$ corresponding to the at least a portion of the first neural network layer to which it is allocated and to generate activation event data, subject to said evaluation. As shown in the example of FIG. 2, each of the processor cores 100_k_1, 100_k_2, 100_k_3 executes a portion of the first neural network layer $L_k$. The partitioning implies that each of the processor cores performs the computations for a subset of the neurons, for example a subset defined by a spatial area in the coordinate space defined by the position coordinates x,y or defined by a subset of the channels. Likewise, a second of the processor cores 100, specifically denoted as 100_k+1_1, 100_k+1_2, and 100_k+1_3 execute respective portions of the second neural network layer Lk+i.

The activation event data generated by a first of the processor cores for example the core 100_k_1 is addressed to specific neurons of the second neural network layer. Upon receipt of the activation event data the second processor core, e.g. 100_k+1_1 that executes the second neural network layer, or portion thereof that comprises the specific neurons, updates the neural state of these specific neurons.

In the improved processor system 1 the first of the processor cores, e.g. core 100_k_1, is configured to transmit a plurality of activation event data issued from a plurality of neurons in the first neural network layer having a common value for at least one of their coordinates in a packed message, wherein the packed message includes that at least one common coordinate value.

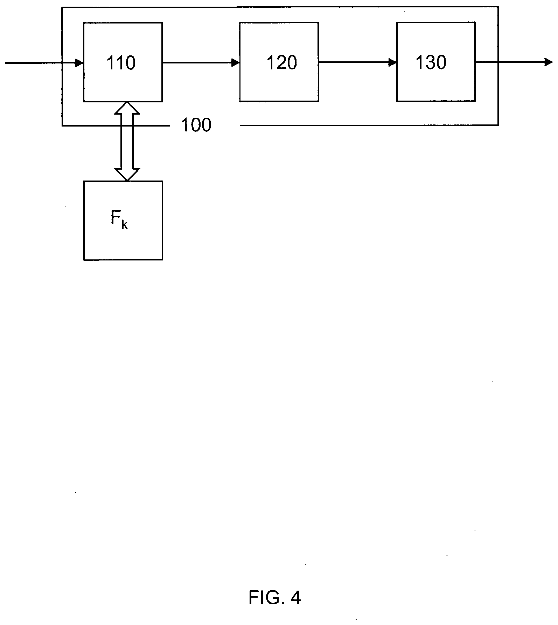

FIG. 4 schematically shows an exemplary processor core 100, e.g. the core denoted as 100_k_1 that executes at least a portion of the first neural network layer $L_k$. As shown therein, the core comprises a processor 110 that is configured to perform the operations to evaluate the neuron states in the first feature map $F_k$, and to generate activation event data subject to said evaluation. The processor 110 provides the generated activation event data to an event queue 120. The processor core 100 further includes an event message generation module 130 that is configured to transmit a plurality of activation event data in a packed message.

In the embodiment shown, the event message generation module 130 is capable to operate in one selected from a plurality of potential operational modes. The plurality of potential operational modes includes a deep neural network operational mode, denoted as DNN-mode. The DNN-mode of the event message generation module 130 is the most relevant operational mode for the purpose of the present application, as it exploits the regularity of the interconnections of neurons in a deep neural network to efficiently use the message exchange network as specified below. However, in the embodiment shown, the plurality of potential operational modes also includes a data flow graph mode, denoted as DFG-mode. The DFG-mode is particularly suitable if a regularity in interconnections is absent. This may be the case if a processor core executes a dataflow graph wherein the computational units that exchange messages are actors rather than neurons. In another exemplary embodiment the event message generation module 130 is always operational in the DNN-mode. In again other embodiments the event message generation module 130 has two or more alternative potential operational modes in addition to the DNN-mode.

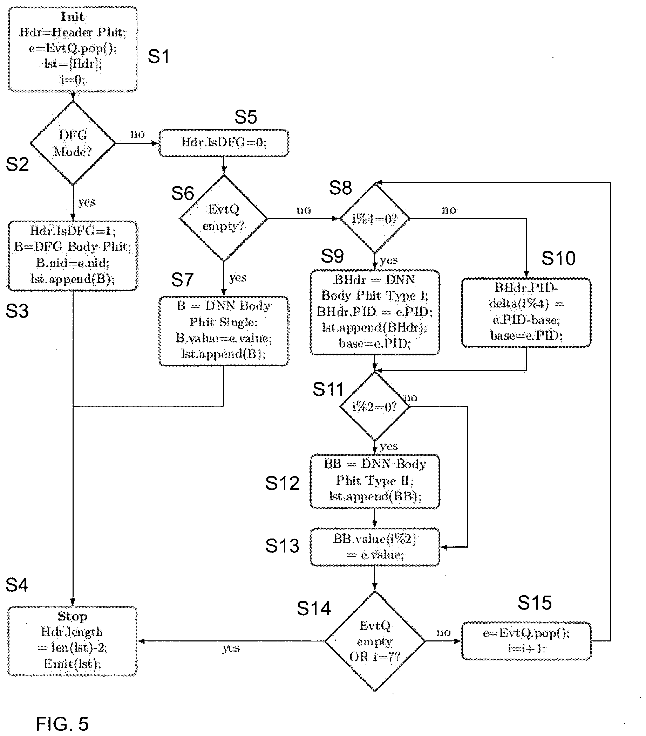

Exemplary operations of the event message generation module 130 are further described with reference to FIG. 5. In this section the amount of data transferred in a single cycle across a NoC link is referred to as a phit (physical unit). A flow control unit is denoted as flit, and represents a set of phits that are routed together. A flit is the smallest routable unit. A single phit does not necessarily contain routing information, and can therefore only be routed in the context of the flit it belongs to. A flit may take several cycles (=phits) to traverse a link.

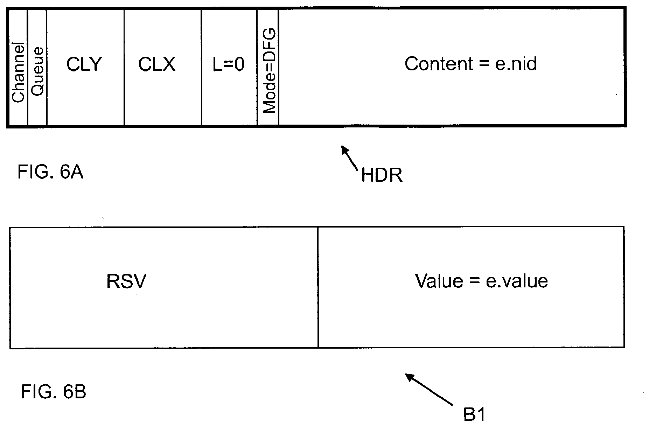

In procedural block S1 an initialization procedure is performed that is the same for both operational modes. In the initialization procedure a message header "HDR" is created as shown in one of FIG. 6A, 7A, 8A that comprises the routing information for the remainder of the flit. The router is to set up a connection, and route all phits that belong to the same flit (atomically) over that connection. In this example the field "Channel" indicates the (physical) channel to route the flit across, and the values "CLY", "CLX" encode the relative y and x hops towards the destination core. Furthermore, the field "Queue" specifies which event queue is to be used by the receiving processor core. Hence the selection of the receiving queue is decoupled from the selection of the physical channel. Therewith the value of the field Queue has no further impact on the routing and switching strategy. Next to this routing information the header phit HDR comprises a field "L" that is to specify the length of the flit measured in remaining phits, i.e., the total number of phits minus one. Since every header phit is always followed by at least one further phit, the length is encoded as the total number of remaining phits in the flit minus one. I.e., when length is zero, exactly one phit will follow the header. Finally the header phit HDR contains a field "Mode" which serves to indicate one of the operational modes {DFG, DNN}. In the DFG-mode the message encodes a single activation event. In the DNN-mode the message may comprise a plurality of activation event data. The header phit HDR further contains a content field "Content" that is to be filled in further processing steps, as specified below.

The header Phit HDR is entered as a first item of a list to be included in the message. Hence, the list "lst" is initialized as

$$Lst = [HDR]$$

As a further initial operation in procedural block S1 an activation event is taken from the event queue 120, which is symbolically denoted as:

$$e = EvtQ.pop()$$

Also an item counter "i" is initialized.

$$i = 0$$

Subsequently, it is determined in procedural block S2 whether event message generation module 130 is operational in the DFG-mode or in the DNN-mode. This is indicated in the Mode field of the header phit HDR.

If the event:message generation module 130 is in the DFG-mode it continues with procedural block S3. In this case the address of the destination neuron within the destination neural network layer or portion thereof that is executed by the destination core is specified in the content field of the header Phit HDR as shown in FIG. 6A. The destination neuron is specified in the event-message taken from the queue 120 as e.nid.

The list is further extended with a body phit B1 as shown in FIG. 6B, wherein the value field is assigned the value e.value of the event e. The abbreviation "RSV" is used in FIG. 6B and other figures to indicate a reserved field. It will be appreciated that a reserved field may be used, for example in this case to specify the value to be conveyed with a higher precision or for other purposes.

Then operation finishes with procedural block S4, wherein the length of the message is specified in the field L of the header Phit HDR. As noted above, to efficiently use the field, the length is specified as the length of the list [HDR, B1] minus 2, i.e. here L = 0. The list is then emitted.

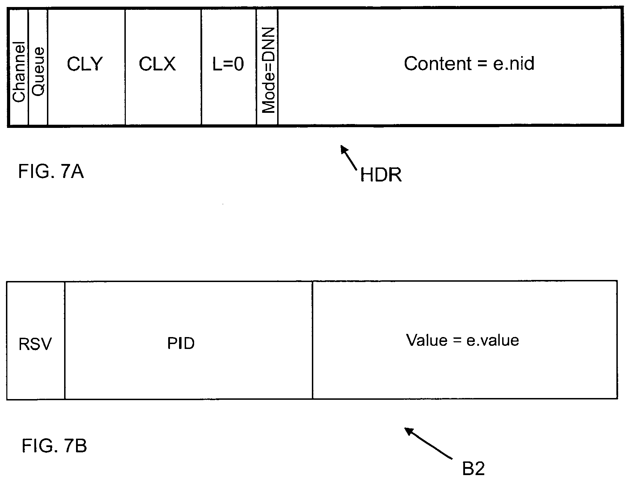

If it is determined in procedural block S2 that the event message generation module 130 is operational in the DNN mode then in procedural block S5 this is indicated (Mode = DNN) in the mode field Mode of the header Phit HDR (See FIG. 7A) in the list.

Subsequently, it is determined in procedural block S6 whether or not the event queue 120 is empty. If this is the case, the procedure continues with procedural block S7 wherein a body Phit B2 is added to the list as shown in FIG. 7B. The value field therein is assigned the value e.value of the activation event. Also an indication PID is specified therein that indicates the channel coordinate value of the neuron to which the event is addressed and therewith a weight set to be used by the receiving processor core.

Subsequent to procedural block S7 the operation finishes with procedural block S4 as specified above. I.e. the list lst [HDR, B2] is transmitted.

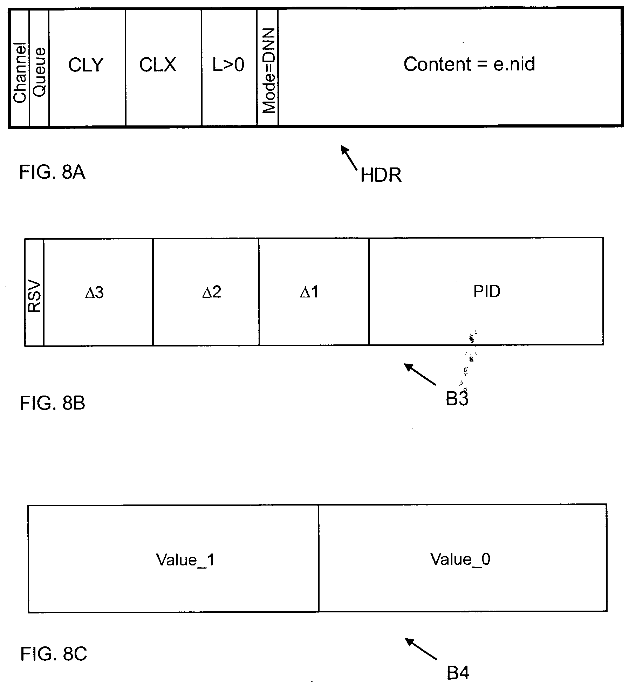

If it is determined in procedural block S6 that the event queue 120 is not empty it is determined in procedural block S8 whether or not the value counter i mod 4 equals 0. If this is the case the next procedural block is S9. Otherwise the next procedural block is S10. The header HDR as shown in FIG. 8A indicates the total number of blocks in the list with the field L. The value of L is the number of blocks (phits) minus 2.

In procedural block S9 a body phit B3 as shown in FIG. 8B is appended to the list. The field PID is therein assigned the value B3.PID = e.PID, which is the channel coordinate value of the neuron that is the source of the event e. This determines the first weight set to be used by the receiving processor core. The event message generation module 130 temporarily stores this channel coordinate value as a variable "base", i.e. base = e.PID.

In procedural block S10 a field $\Delta k$, with in this case k = 1,2 or 3 is assigned a value that indicates the difference of the value of PID in the current event and the value stored in the variable base. I.e. the field $B3.\Delta k$ = e.PID - base, wherein k = i mod 4.

The variable base is then assigned the value of PID of the current event, i.e. base = e.PID.

In exceptional cases it may happen that the value e.PID - base exceeds the maximum value that can be encoded in the field $B3.\Delta k$. In that case other procedural steps can be performed to convey the event data. For example, in that case the event data may be transmitted by using a phit of type B2 as shown in FIG. 7B.

Subsequent to performing either of procedural blocks S9 or S10 the procedure performs procedural block S11, wherein it is determined whether or not the value counter i is a multiple of 2. If this is the case, in procedural block S12 a new body phit B4 as shown in FIG. 8C is appended to the list. Procedural block S12 is succeeded by procedural block S13 wherein a field Valuek (here k = 1 or 2) is assigned the value of the current activation event e, i.e. the last event that was retrieved from the event queue 120. Hence, B4.value_k = e.value, wherein k = i mod 2.

If it is determined in procedural block S11 that the value i is not a multiple of 2, then the procedure skips procedural block S12 and instead directly proceeds with procedural block S13.

Procedural block S13 is succeeded by procedural block S14, which determines whether or not a stop condition is complied with. The stop condition is complied with in any of the following cases:

    a) The event queue is empty
    b) The event counter has a predetermined maximum value, for example 7.

If the stop condition is complied with, the operation finishes with procedural block S4 as specified above.

If the stop condition is not complied with, the operation continues with procedural block S15, wherein a next event e is popped from the event queue and the event counter i is incremented with 1. Procedural block S15 is succeeded with procedural block S8 as described above.

Accordingly, in the embodiment shown, the event message generation module 130 when operational in the DFG-mode will transmit a message comprising the header HDR of FIG. 6A and the body phit B1 of FIG. 6B. When operational in the DNN-mode it will transmit a message comprising the header HDR of FIG. 7A and the body phit B2 of FIG. 7B if there is only one activation event in the event queue 120. If the event message generation module 130 is operational in the DNN-mode and the event queue 120 contains more than one activation event, it will send a packed message comprising a header HDR as shown in FIG. 8A followed by body phits of type B3 (FIG. 8B) and B4 (FIG. 8C). The packed message then comprises a list with phits specified as: HDR $[B3,B4,B4]_{n1}$ $[B3,B4]_{n2}$.

It is noted that in the example described above, it is presumed that the maximum number of activation events that is packed is 8. In alternative embodiments a smaller or a larger number of events is packed. Also other phit types for transmitting a packed message may be contemplated. For example a phit of type B3 may be replaced with a phit having more or less address fields, or a phit of type B4 may be replaced with a phit having more or less value fields. Also phits of a type with both address and value fields may be contemplated.

As noted above, a processor core 100 comprises a processor 110 that is configured to perform the operations to evaluate the neuron states in a feature map, e.g. a feature map Fk, and to generate activation event data subject to said evaluation. According to one option the processor 110 performs neuron state evaluation and generation of activation event data in mutually separate operational phases. According to another option, which is more common in neuromorphic and other event-based AI machines there is no separate readout phase. According to this option for each update of a neural state of a neuron resulting from an event, the allocated processor core evaluates the activation function of the neuron, and if the allocated processor core determines that the state of the neuron complies with a firing condition, it generates an output event.

In an example the processor 110 updates the neural state of a neuron in a Z-first order. That is the processor core updates the neural states in a sequence of feature map elements arranged along the z-axis having a predetermined pair of position coordinate values x,y before proceeding with a next sequence of feature map elements arranged along the z-axis with another x,y coordinate value pair. If all the updates of the current input event are evaluated in target Z-first order, then the activation events resulting from the updates can be efficiently bundled for transmission as a packed message. It is noted that activation events may be bundled otherwise. For example, it may be contemplated to bundle event messages obtained by evaluating neurons in a region in the X-Y plane, or even on the complete X-Y plane while keeping the Z-coordinate value constant. This approach enables reusing weights and part of the state information, however due to sparsity not all state information can be preserved.

If the allocated processor core performs the neuron state evaluation and generation of activation event data in mutually separate operational phases, then it suffices that it only generates the activation events in a specified order.

In the embodiment of FIG. 5 the common indication in the packed message comprises a respective value for each of the first and the second position coordinate (X,Y), and for each of the plurality of activation event data an indication of the channel coordinate value (Z) and a respective activation event value.

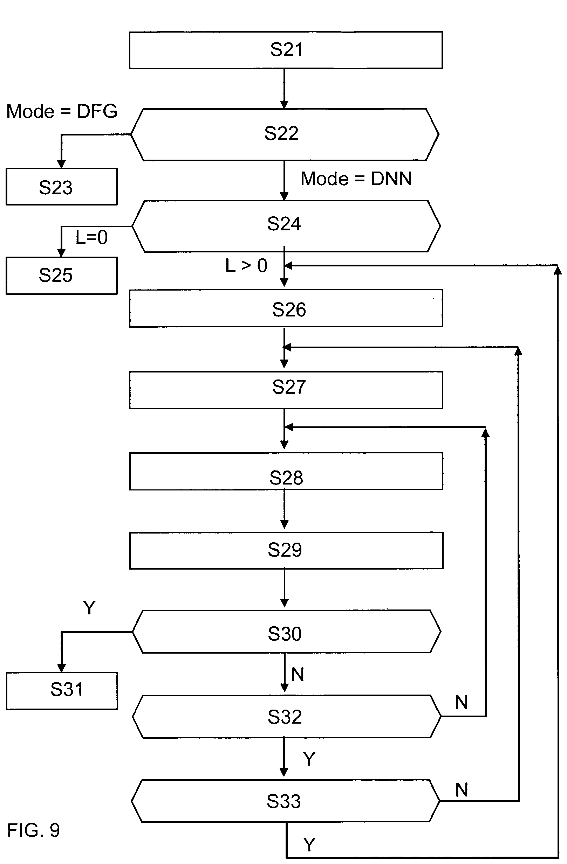

FIG. 9 shows operations performed by a processor core that receives a message as transmitted in the procedure of FIG. 5.

In procedural block S21 the receiving processor core receives the header HDR of the message.

In procedural block S22 the receiving processor core identifies the mode indicated in the header HDR.

If the mode is indicated as DFG, the receiving processor core proceeds with procedural block S23, wherein it further receives the body phit of type B1 as shown in FIG. 6B and subsequently it updates the single neuron that is identified in the header HDR based on the transmitted value included in the body phit B1.

If the mode is indicated as DNN, the receiving processor core proceeds with procedural block S24, wherein it determines whether or not the value L differs from 0.

If the value L is equal to 0, the receiving processor core proceeds with procedural block S25, wherein it further receives the body phit of type B2 as shown in FIG. 7B and subsequently it updates the single neuron that is identified in the header HDR (FIG. 7A) and the body phit B2 (FIG. 7B) based on the transmitted value included in the body phit B2.

If the value L is greater than 0, the receiving processor core initializes a data element counter i at 0 and proceeds with procedural block S26, wherein it further receives a body phit of type B3 as shown in FIG. 8B. The body phit B3 includes an absolute channel coordinate values of a first neuron addressed by an event in the packed message an relative channel coordinate values of one or more other neurons addressed by other events in the packed message. Each of the relative channel coordinate values indicates the difference of the z-coordinate of the associated source neuron with the z-coordinate of the source neuron associated with the preceding event in the packed message. The relative channel coordinate values are specified with a lesser number of bits than the absolute channel coordinate value. For example, the number of bits reserved for each relative channel coordinate value is at most half the number of bits reserved for the absolute channel coordinate value.

The receiving processor core then proceeds with procedural block S27 wherein it further receives a body phit of type B4 as shown in FIG. 8C which contains data value information.

In subsequent procedural block S28 the receiving processor core inputs a data element from the data received in procedural blocks S26, S27. The receiving cluster may directly perform neural network update operations on the basis of the received data element, but it may alternatively buffer the received data element before performing the update operations.

In subsequent procedural block S29 the receiving processor core increments the data-element counter by one.

If it is determined in procedural block S30 that the counter has reached a maximum value, procedure stops in procedural block S31. At this point the receiving processor core will expect a new header block.

If the maximum value is not yet reached, the receiving processor core examines whether or not the data-element counter is a multiple of 2. If this is not the case (N) it proceeds with the execution of procedural block S28. If the receiving processor core determines that the data-element counter is indeed a multiple of 2 (Y) the receiving processor core further examines whether or not the data-element counter is a multiple of 4. If this is not (N) the case it proceeds with execution of procedural block S27. Otherwise (Y) it proceeds with the execution of procedural block S26.

If it is determined in procedural block S30 that the maximum value is reached, then operation proceeds with procedural block S31. At this point the receiving core has received a list of event data to update a state value of a neuron having neuron coordinate values $[z]$ $[y']$ $[x']$. Each item j in the list comprises an event value $V_j$ of a source neuron and the corresponding pattern index j of the weight to be used. The event values are the elements {Source $[j_1][y]$ $[x]$, Source$[j_2][y]$ $[x]$,..., Source$[j_N][y]$ $[x]$}.

The pattern indices $j_i$, $j_2$, ...,$j_N$ can be directly successive values, but this is not necessary in particular if activations are sparse. As discussed above, the pattern indices are transmitted in encoded form. That is the absolute value of a first pattern index is transmitted in the field PID of a phit block B3 and three differences between subsequent pattern index values are transmitted in the fields $\Delta 1$, $\Delta 2$, $\Delta 3$. In procedural block S31 the absolute pattern index values are computed. I.e.

$j_1 = PID, j_2 = j_1+\Delta 1, j_3 = j_2+ \Delta 2, j_4 = j_3 + \Delta 3$

Likewise, with the information from the subsequent phit block B3

$j_5 = PID, j_6 = j_5+\Delta 1, j_7 = j_6+ \Delta 2, j_8 = j_7 + \Delta 3$

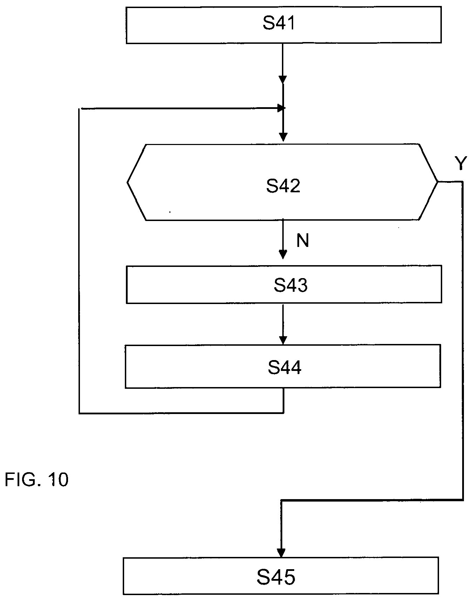

FIG. 10 shows how the receiving processor core uses the data obtained from the packed message to efficiently update a state value of a neuron having neuron coordinate values $[z]$ $[y']$ $[x']$.

In procedural block S41 of the procedure of FIG. 10, the receiving processor core assigns the state value of the neuron having neuron coordinate values $[z][y'][x']$ to a temporary variable.

$$\mathrm{Tmp} = \mathrm{Destination}[z][y'][x']$$

In procedural block S43 it is verified whether a counter m has achieved a maximum value. The maximum value is indicated in the header block HDR.

If this is not the case, the receiving processor core proceeds with procedural block S43 to update the value stored in the temporary value as:

Tmp += Source[m] * W[z][$j_m$][y'-y][x'-x], wherein W[z][$j_m$][l][k] is a weight value.

The weight is retrieved from a location in a pattern memory with index $[z][j_m][y'-y]$ $[x'-x]$, wherein z is the Z-coordinate values of the destination neuron, $j_m$ is the pattern index reconstructed from the packed message.

Subsequently the receiving processor core increments the counter m in procedural block S44 and proceeds with the verification in block S42.

If it is determined in block S42 that the counter m has reached the maximum value the procedure ends with procedural block S45, wherein the receiving processor core writes the value of the temporary variable tmp to the neuron having neuron coordinate values $[z]$ $[y']$ $[x']$. Otherwise the procedure continues with block S43.

Due to the fact that the event message generation module 130 of the transmitting processor core 100 has transmitted a plurality of activation event data having a same destination neuron in a packed message, the receiving processor core only needs to access the memory location for that neuron only once for a read operation and only once for a write operation for performing all updates.

In the following claims the word "comprising" does not exclude other elements or steps, and the indefinite article "a" or "an" does not exclude a plurality. A single component or other unit may fulfill the functions of several items recited in the claims. The mere fact that certain measures are recited in mutually different claims does not indicate that a combination of these measures cannot be used to advantage. Any reference signs in the claims should not be construed as limiting the scope.

**Claims**

1. A processor system (1) comprising a plurality of processor cores (100, 200) and a message exchange network (20), wherein the processor cores are configured to exchange messages between each other using the message exchange network,

   wherein the processor system is configured to execute a neural network having at least a first and a second neural network layer ($L_k$, $L_{k+1}$) which first neural network layer ($L_k$) has a corresponding first feature map (Fk), which second neural network layer ($L_{k+1}$) has a corresponding second feature map ($F_{k+1}$), a feature map corresponding to a neural network layer comprising a plurality of feature map data elements each being indicative for a neural state of a respective neuron of said neural network layer, and wherein feature map data is addressable by a set of at least two coordinates, including at least a position coordinate (X,Y) indicative for a position in the feature map and a channel coordinate (Z) that indicates an element of a feature channel at the indicated position,
wherein a first of the processor cores which executes at least a portion of the first neural network layer ($L_k$) is configured to evaluate the neuron states in the first feature map ($F_k$), and, subject to said evaluation, to generate activation event data to be transmitted to a second of the processor cores which executes at least a portion of the second neural network layer ($L_{k+1}$), which activation event data is addressed to specific neurons of the second neural network layer, which second of the processor cores is configured to update the neural state of said specific neurons upon receipt of the activation event data,
**characterized in that** the first of the processor cores is configured to transmit a plurality of activation event data issued from a plurality of neurons in the first neural network layer having a common value for at least one of their coordinates in a packed message, wherein the packed message comprises an indication for that at least one common coordinate value.

2. The processor system according to claim 1, wherein the indication in the packed message comprises a respective value for each position coordinate (X,Y) of neurons in the first neural network layer for which activation event data is transmitted, and for each of the plurality of activation event data an indication of the channel coordinate (Z) of said neurons and a respective activation event value.

3. The processor system according to claim 2, wherein the indication of the channel coordinate (Z) for each of the plurality of activation event data in the packed message comprises an absolute value of the channel coordinate of a first one of the neurons in the first neural network layer for which activation event data is transmitted and one or more relative values, each indicating a difference between the absolute value of the channel coordinate of a neuron in the first neural network layer for which activation event data is transmitted and the absolute value of the channel coordinate of a preceding neuron in the first neural network layer for which activation event data is transmitted.

4. The processor system according to claim 1 or 2, wherein the plurality of activation event data in the packed message is directed to a single neuron in the second neural network layer.

5. The processor system according to one of the preceding claims, wherein the first of the processor cores is configured to temporarily buffer activation event data which are generated while evaluating neuron states of the first feature map.

6. The processor system according to claim 5, wherein the first of the processor cores is configured to transmit the packed message for a predetermined number of buffered activation event data.

7. The processor system according to claim 5 or 6, wherein the first of the processor cores is configured to transmit the packed message for buffered activation event data pertaining to a single position in the first feature map specified by the one or more position coordinates (X, Y) in the feature map when it proceeds to evaluate a next position in the first feature map.

8. The processor system according to claim 5 or 6, wherein the first of the processor cores is configured to transmit the packed message for buffered activation event data pertaining to a narrow range corresponding to a position in the first feature map specified by the position coordinate(s) (X,Y) in the feature map when it proceeds to evaluate a next position in the first feature map, wherein the buffered activation event data has a common destination range in the corresponding neurons of the second feature map.

9. The processor system according to one of the preceding claims, wherein the second processor core upon receiving the packed message performs all updates of a neuron state of a neuron in the second neural network layer on the basis of each of the activation event data in the packed message of which that neuron is a destination before proceeding to update a neuron state of another neuron in the second neural network layer.

10. A method for operating a processor system (1) comprising a plurality of processor cores (100, 200) and a message exchange network (20), the method comprising:

configuring the processor system to execute a neural network having at least a first and a second neural network layer ($L_k$, $L_{k+1}$),

which first neural network layer ($L_k$) has a corresponding first feature map ($F_k$),

which second neural network layer (Lk+i) has a corresponding second feature map ($F_{k+1}$),

a feature map corresponding to a neural network layer comprising a plurality of feature map data elements each being indicative for a neural state of a respective neuron of said neural network layer, and wherein feature map data is addressable by a set of at least two coordinates, comprising at least a position coordinate (X,Y) to indicate a position in the feature map and a channel coordinate (Z) to indicate an element of a feature channel at the indicated position,

wherein a first of the processor cores executes at least a portion of the first neural network layer ($L_k$) and a second of the processor cores executes at least a portion of the second neural network layer ($L_{k+1}$),

wherein the first of the processor cores evaluates the neuron states in the first feature map (Fk), and, subject to said evaluation, generates activation event data,

transmitting the activation event data to the second of the processor cores, the activation event data being addressed to specific neurons of the second neural network layer,

wherein the second of the processor cores updates the neural states of the specific neurons based on the received activation event data, **characterized in that** the first of the processor cores transmits a plurality of activation event data issued from a plurality of neurons in the first neural network layer having a common value for at least one of their coordinates in a packed message, which packed message comprises an indication for the common value.

FIG. 1

FIG. 2

FIG. 3

FIG. 4

**Init**
Hdr=Header Phit;
e=EvtQ.pop();
lst=[Hdr];
i=0;

S1

S2 — DFG Mode?

no → S5 — Hdr.IsDFG=0;

yes

S3 — Hdr.IsDFG=1;
B=DFG Body Phit;
B.nid=e.nid;
lst.append(B);

S6 — EvtQ empty?

no → S8 — i%4=0?

yes

S7 — B = DNN Body Phit Single;
B.value=e.value;
lst.append(B);

S8 — i%4=0? no → S10 — BHdr.PID-delta(i%4) = e.PID-base; base=e.PID;

S9 — BHdr = DNN Body Phit Type I;
BHdr.PID = e.PID;
lst.append(BHdr);
base=e.PID;

S11 — i%2=0?

no →

yes

S12 — BB = DNN Body Phit Type II;
lst.append(BB);

S13 — BB.value(i%2) = e.value;

S4 — **Stop**
Hdr.length = len(lst)-2;
Emit(lst);

S14 — EvtQ empty OR i=7?

yes ← 

no → S15 — e=EvtQ.pop();
i=i+1;

FIG. 5

| Channel | Queue | CLY | CLX | L=0 | Mode=DFG | Content = e.nid |
|---------|-------|-----|-----|-----|----------|-----------------|

**FIG. 6A**

HDR

| RSV | Value = e.value |
|-----|-----------------|

**FIG. 6B**

B1

| Channel | Queue | CLY | CLX | L=0 | Mode=DNN | Content = e.nid |
|---------|-------|-----|-----|-----|----------|-----------------|

HDR

FIG. 7A

| RSV | PID | Value = e.value |
|-----|-----|-----------------|

B2

FIG. 7B

| Channel | Queue | CLY | CLX | L>0 | Mode=DNN | Content = e.nid |
|---------|-------|-----|-----|-----|----------|-----------------|

**FIG. 8A**

HDR

| RSV | Δ3 | Δ2 | Δ1 | PID |
|-----|-----|-----|-----|-----|

**FIG. 8B**

B3

| Value_1 | Value_0 |
|---------|---------|

**FIG. 8C**

B4

FIG. 9

FIG. 10

Europäisches
Patentamt

European
Patent Office

Office européen
des brevets

# EUROPEAN SEARCH REPORT

Application Number

EP 22 29 0041

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 944 153 A1 (GRAL MATTER LABS S A S [FR]) 26 January 2022 (2022-01-26) * figures 1-4 * * paragraphs [0007] – [0026] * * paragraphs [0031] – [0063] * | 1-10 | INV. G06N3/063 ADD. G06N3/04 |
| Y | MOSTAFA MAHMOUD ET AL.: "TensorDash: Exploiting Sparsity to Accelerate Deep Neural Network Training and Inference", ARXIV.ORG, CORNELL UNIVERSITY LIBRARY, 201 OLIN LIBRARY CORNELL UNIVERSITY ITHACA, NY 14853, 1 September 2020 (2020-09-01), XP091102656, DOI: 10.1109/MICRO50266.2020.00069 * section 3 * | 1-10 | |
| A | US 2018/046906 A1 (NVIDIA CORP [US]) 15 February 2018 (2018-02-15) * the whole document * | 1-10 | |
| A | US 2019/228307 A1 (SAMSUNG ELECTRONICS CO LTD [KR]; SEOUL NAT UNIV R&DB FOUNDATION [KR]) 25 July 2019 (2019-07-25) * paragraphs [0099], [0113] * * figures 2, 3, 8C, 10 * | 1-10 | TECHNICAL FIELDS SEARCHED (IPC) G06N |

The present search report has been drawn up for all claims

| Place of search | Date of completion of the search | Examiner |
|---|---|---|
| The Hague | 19 December 2022 | Millet, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 29 0041

This annex lists the patent family members relating to the patent documents cited in the above-mentioned European search report.
The members are as contained in the European Patent Office EDP file on
The European Patent Office is in no way liable for these particulars which are merely given for the purpose of information.

19-12-2022

| Patent document cited in search report | | Publication date | Patent family member(s) | | Publication date |
|---|---|---|---|---|---|
| EP 3944153 | A1 | 26-01-2022 | EP 3944153 A1 | | 26-01-2022 |
| | | | WO 2022018261 A1 | | 27-01-2022 |
| US 2018046906 | A1 | 15-02-2018 | US 2018046906 A1 | | 15-02-2018 |
| | | | US 2018046916 A1 | | 15-02-2018 |
| | | | US 2020082254 A1 | | 12-03-2020 |
| US 2019228307 | A1 | 25-07-2019 | NONE | | |

EPO FORM P0459

For more details about this annex : see Official Journal of the European Patent Office, No. 12/82